# EUROPEAN PATENT APPLICATION

(11) **EP 4 393 283 A1**
(43) Date of publication of application: **03.07.2024**
(21) Application number: 22216843.7
(22) Date of filing: 27.12.2022
(51) Int. Cl.: A01B 17/00

(54) **AGRICULTURAL PLOUGH WITH PHOTOSYNTHESIS DISRUPTING KNIFE**

(71) Applicant: CNH Industrial Sweden AB, 590 96 Överum (SE)
(72) Inventor: LINDERSON, Bengt Per-Inge, 594 94 Odensvi (SE); HERTZOG, Daniel, 59376 Blackstad (SE); SVENSSON, Robert, 59095 Loftahammar (SE)
(74) Representative: Raasch, Detlef

(57) **Abstract**

An agricultural plough (10) includes: a frame (12); a mount (14) coupled to the frame (12) and configured to couple the frame (12) to an agricultural vehicle (7); at least one beam (300, 700) carried by the frame (12) and including a beam frame (310) that carries at least one plough body (330); and a depth adjustment mechanism (20) coupled to the frame (12) and configured to adjust a furrow depth (FD) of a furrow (610) created in soil by the at least one plough body (330). At least one blade (340) is associated with the at least one plough body (330) and carried by the beam frame (310) at a blade depth (342) such that the at least one blade (340) is configured to separate a photosynthetic region (622) of a plant (620) from a root (621) of the plant (620) before or as the at least one plough body (330) creates the furrow (610).

## Description

### FIELD OF THE INVENTION

The present invention pertains to an agricultural implement and, more specifically, to an agricultural plough.

### BACKGROUND OF THE INVENTION

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth-enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern ploughs typically include a plurality of plough bodies connected to a plough frame such that they are laterally offset from each other when the agricultural plough is in use. Each plough body is connected to the agricultural plough frame via corresponding beams. The agricultural plough frame, in turn, is connected to a towing or pushing vehicle via a hitch arranged at a front or back end of the frame.

Ploughing not only turns over soil but can also bury weeds under the soil, which can reduce the number of weeds in the field. However, there are instances where the weeds are still able to grow after being buried. In some instances the weeds are also buried with residue from the field, which can act as fertilizer for the weeds as the residue breaks down.

What is needed in the art is a way to plough a field in a manner that can reduce the number of subsequent weeds that grow in the field.

### SUMMARY OF THE INVENTION

Exemplary embodiments provided according to the present disclosure provide a blade that is carried by an agricultural plough such that the blade is configured to separate a photosynthetic region of a plant from a root of the plant during ploughing.

In some exemplary embodiments provided according to the present disclosure, an agricultural plough includes: a frame; a mount coupled to the frame and configured to couple the frame to an agricultural vehicle; at least one beam carried by the frame and including a beam frame that carries at least one plough body; and a depth adjustment mechanism coupled to the frame and configured to adjust a furrow depth of a furrow created in soil by the at least one plough body. At least one blade is associated with the at least one plough body and carried by the beam frame at a blade depth such that the at least one blade is configured to separate a photosynthetic region of a plant from a root of the plant before or as the at least one plough body creates the furrow.

In some embodiments, the agricultural plough further includes at least one skimmer associated with the at least one plough body and carried by the frame in front of the at least one plough body, the at least one skimmer being configured to cut soil to a skimmer depth that is less than the furrow depth. The at least one blade may be coupled to the at least one skimmer. The blade depth may be greater than the skimmer depth. The at least one skimmer may be coupled to the frame by a rail and the at least one skimmer may be adjustably coupled to the rail such that the skimmer depth is adjustable. The at least one blade may be mounted to a skimmer bracket coupled to the at least one skimmer.

In some embodiments, the at least one plough body comprises a plurality of plough bodies and the at least one blade comprises a plurality of blades, each of the blades being associated with a respective one of the plough bodies.

In some embodiments, the at least one blade is flat and/or is carried in front of the at least one plough body.

In some exemplary embodiments provided according to the present disclosure, an agricultural plough system includes an agricultural vehicle carrying the previously described agricultural plough.

In some embodiments, the agricultural plough comprises a plurality of plough bodies each configured to create a respective furrow while being carried by the agricultural vehicle, each of the furrows extending in parallel relative to the other furrows. The agricultural plough may be carried at an angle relative to a travel axis of the agricultural vehicle.

In some exemplary embodiments provided according to the present disclosure, a method of ploughing a field with the previously described agricultural plough system includes carrying the agricultural plough across the field with the agricultural vehicle so the at least one blade severs a photosynthetic region of a plant from a root of the plant prior to the separated photosynthetic region and the root being buried in soil as the at least one plough body creates the furrow. The method may further include burying the separated root and photosynthetic region in soil with the at least one plough body.

A possible advantage that may be realized by exemplary embodiments disclosed herein is that the blade(s) separating the photosynthetic region from the root can reduce the likelihood that the plant will re-grow after being buried in the soil.

Another possible advantage that may be realized by exemplary embodiments disclosed herein is that the blade(s) can be easily and conveniently retrofit to an agricultural plough.

Yet another possible advantage that may be realized by exemplary embodiments disclosed herein is that the blade(s) may be placed in a manner that the blade(s) do not disrupt soil and/or residue flow during ploughing.

### BRIEF DESCRIPTION OF THE DRAWINGS

For the purpose of illustration, there are shown in the drawings certain embodiments of the present invention. It should be understood, however, that the invention is not limited to the precise arrangements, dimensions, and instruments shown. Like numerals indicate like elements throughout the drawings. In the drawings:
FIG. 1A illustrates a right-side view of a portion of an agricultural implement in the form of an agricultural plough with fixed ground engaging tools of the prior art;
FIG. 1B illustrates a left-side view of the ground engaging tools shown in FIG. 1A;
FIG. 1C shows a plan view of an agricultural implement incorporating the ground engaging tools of FIGS. 1A and 1B;
FIG. 2 illustrates a schematic representation of the trajectory of an agricultural ploughing system within a work area;
FIG. 3 illustrates a side view of an exemplary embodiment of a beam of an agricultural plough provided according to the present disclosure that includes plough bodies and blades associated with the plough bodies;
FIG. 4 illustrates a perspective view of the beam of the agricultural plough illustrated in FIG. 3;
FIG. 5 illustrates a close-up side view of one of the plough bodies and blades of FIG. 3;
FIG. 6 illustrates the agricultural plough with the beam of FIGS. 3-5 being used to plough a portion of a field;
FIG. 7 illustrates a side view of a portion of another exemplary embodiment of a beam that can be mounted to a frame of an agricultural plough and has a blade mounted in a different location than the beam of FIGS. 3-6;
FIG. 8 illustrates a perspective view of the beam of the agricultural plough of FIG. 7; and
FIG. 9 illustrates a front view of the beam of the agricultural plough of FIGS. 7-8.

### DETAILED DESCRIPTION OF THE INVENTION

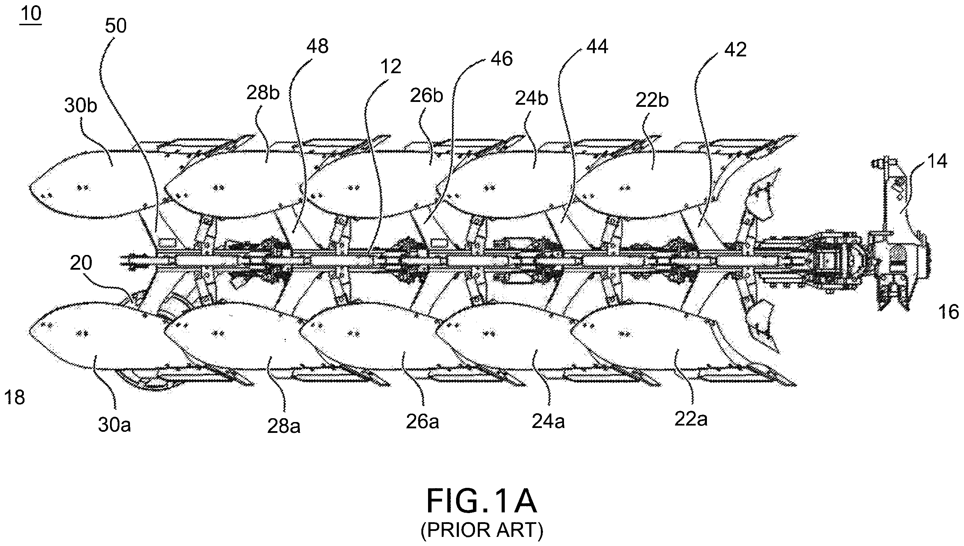

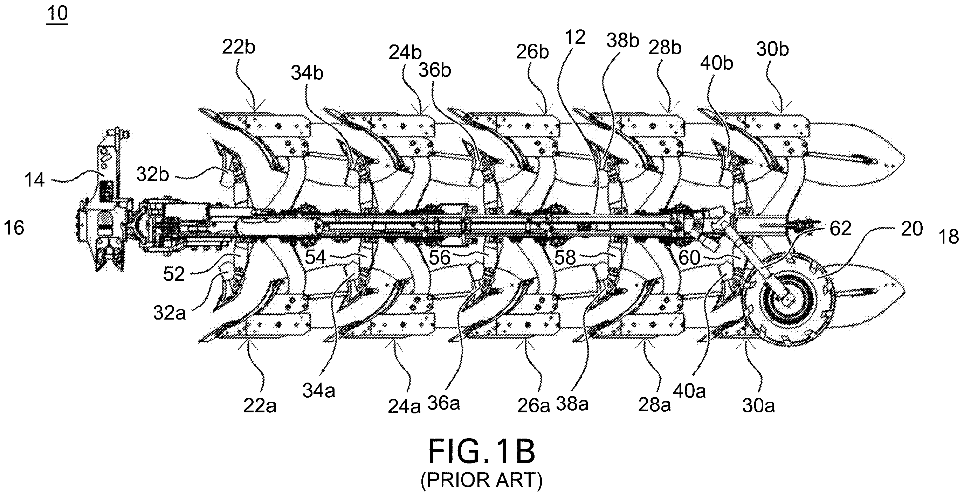

FIGS. 1A to 1C show various views of an agricultural implement, provided in the form of an agricultural plough 10. The agricultural plough 10 shown in FIGS. 1A to 1C is a reversible plough, but it should be appreciated that the agricultural implements provided according to the present disclosure do not need to be reversible.

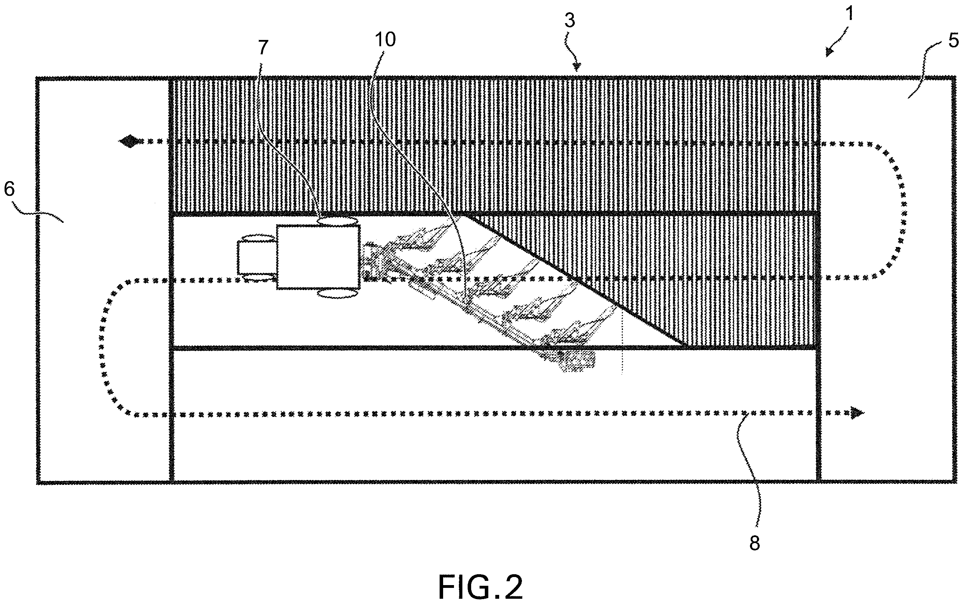

The agricultural plough 10 includes a frame 12. The frame 12 may be a rectangular or round tube extending between a mount 14, which may also be called a headstock, at a front end 16 of the agricultural plough towards a depth adjustment mechanism 20 that is provided in the form of a wheel at a rear end 18 of the agricultural plough. The mount 14 is configured to couple the frame 12 to an agricultural vehicle, illustrated in the form of a tractor 100 in FIG. 2, and the depth adjustment mechanism 20 is configured to adjust a height of the frame 12, as will be described further herein.

In the example of FIGS. 1A to 1B, the ground engaging tools include plough bodies 22a, 22b, 24a, 24b, 26a, 26b, 28a, 28b, 30a, 30b and may optionally include plough skimmers 32a, 32b, 34a, 34b, 36a, 36b, 38a, 38b, 40a, 40b. A plurality of first ground engaging tools, i.e. plough bodies 22a, 24a, 26a, 28a, 30a and skimmers 32a, 34a, 36a, 38a, and 40a, may be arranged on a first side of the frame 12. A plurality of second ground engaging tools, i.e. plough bodies 22b, 24b, 26b, 28b, 30b and optionally skimmers 32b, 34b, 36b, 38b, and 40b, may be arranged on a second side of the frame 12, opposite to the plurality of first ground engaging tools.

Each of the agricultural plough bodies 22a, 22b, 24a, 24b, 26a, 26b, 28a, 28b, 30a, 30b may be connected to the frame 12 by beams 42, 44, 46, 48, 50. Each of the beams 42, 44, 46, 48, 50 may have a substantially Y-shaped structure.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the agricultural plough is dragged behind or pushed by an agricultural vehicle such as a tractor. It follows that each run of the illustrated plough 10 through a field creates five adjacent furrows. Each of the furrows may be parallel to one another.

A first rail 52 supports a first pair of skimmers 32a, 32b. A second rail 54 supports a second pair of skimmers 34a, 34b. A third rail 56 supports a third pair of skimmers 36a, 36b. A fourth rail 58 supports a fourth pair of skimmers 38a, 38b. A fifth rail 60 supports a fifth pair of skimmers 40a, 40b. The skimmers 32a, 32b, 34a, 34b, 36a, 36b, 38a, 38b, 40a, 40b and/or their respective rails 52, 54, 56, 58, 60 may be adjustable with respect to the frame 12 to change the distance between the skimmers 32a, 32b, 34a, 34b, 36a, 36b, 38a, 38b, 40a, 40b and the frame 12. In one example, the skimmers 32a, 32b, 34a, 34b, 36a, 36b, 38a, 38b, 40a, 40b may be adjustably coupled to their respective rail 52, 54, 56, 58, 60 so the skimmers 32a, 32b, 34a, 34b, 36a, 36b, 38a, 38b, 40a, 40b are movable up and down towards and away from the frame 12 to individually adjust a skimmer depth of each of the skimmers 32a, 32b, 34a, 34b, 36a, 36b, 38a, 38b, 40a, 40b. The skimmers 32a, 32b, 34a, 34b, 36a, 36b, 38a, 38b, 40a, 40b may either be manually or automatically adjustable.

Turning to FIG. 2, a typical operation of an agricultural ploughing system including an agricultural vehicle 7 carrying the agricultural plough 10 is described. In use, the agricultural plough 10 is drawn as an attachment (implement) behind an agricultural towing vehicle (e.g. tractor 7). It will be appreciated that it is equivalently feasible to locate the agricultural plough 10 in front of or both in front of and behind the tractor 7.

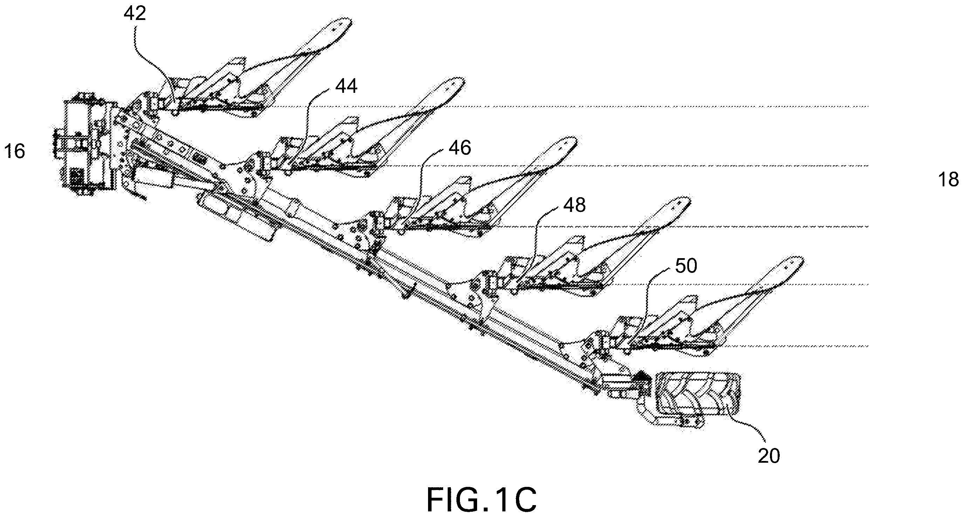

FIG. 2 shows a schematic work area 1, e.g. a crop field, which is divided into a main field 3 and headlands 5,6. A tractor 7 draws the agricultural plough 10 across the main field 3 in generally parallel working rows. The working rows are part of the trajectory 8, which may also be referred to as a "travel axis," of the tractor 7 and typically run in parallel with a long edge of the work area 1. Each working row represents an individual run of the agricultural machinery across the field between headlands 5 and 6. A five-furrow plough, such as the exemplary plough shown in FIG. 1C creates a total of five furrows per run. The agricultural plough 10 may be carried at an angle relative to the travel axis 8. Further details of the structure and function of an agricultural plough may be found in U.S. Patent Application Publication No. 2020/0337211, which is incorporated in its entirety herein by reference.

It has been found that ploughing may cause weeds to be re-buried under soil without killing the weeds. The buried weeds may continue growing and may be more difficult to reach, for example, with herbicide and other weed control methods. The buried weeds may not be reachable by herbicide until crops have sprouted and are growing in the field, at which point it is difficult to selectively eliminate the weeds.

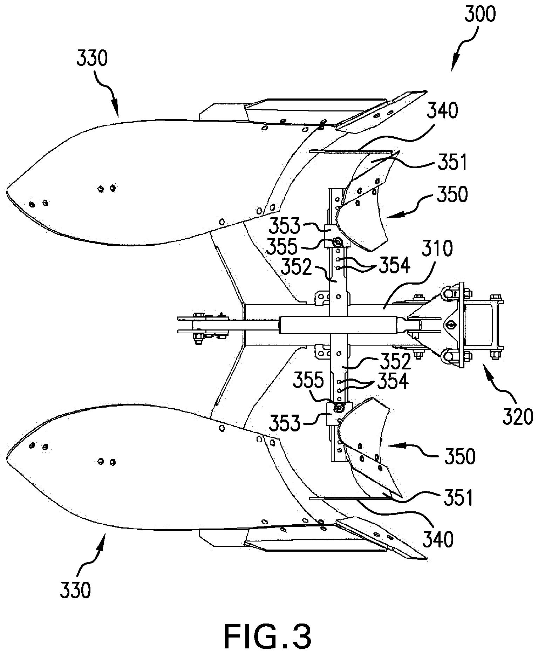

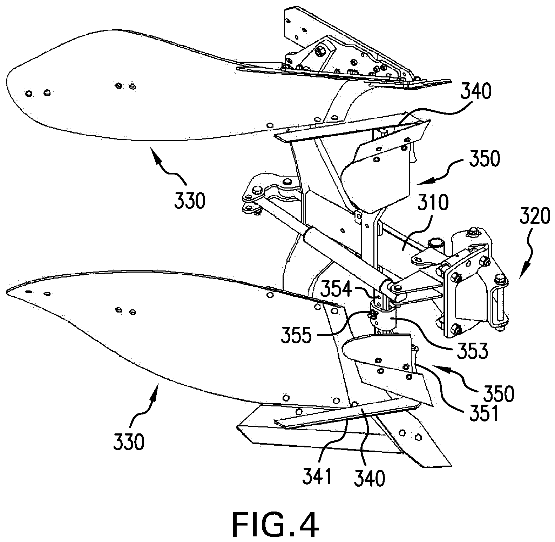

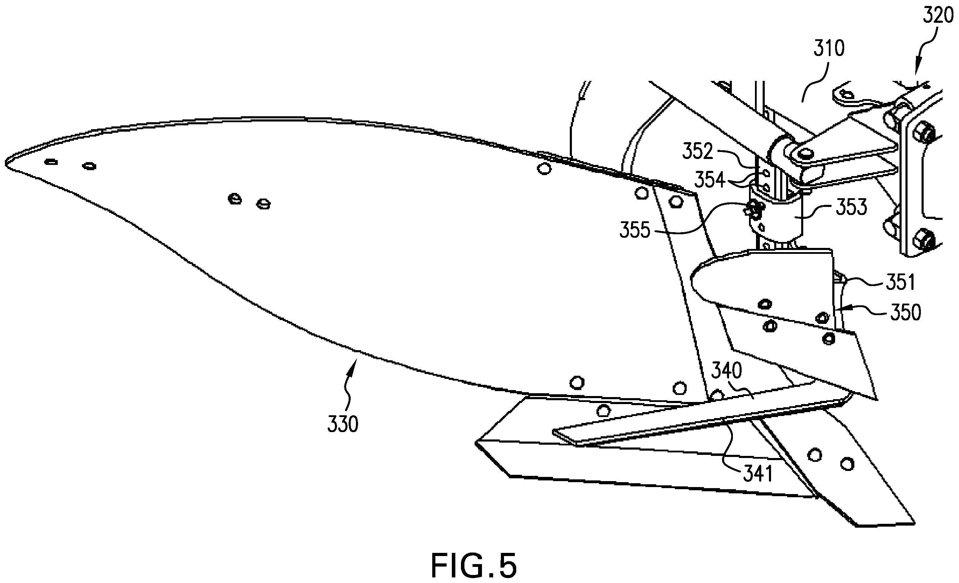

To reduce the number of weeds in a field, and referring now to FIGS. 3-6, a beam 300 including tools that can be mounted to the frame 12 of the agricultural plough 10 is illustrated. The beam 300 is mounted to the frame 12 so the frame carries the tools. While only one beam 300 is illustrated in FIGS. 3-6, it should be appreciated that the agricultural plough 10 can include multiple beams 300 coupled to the frame 12 so the frame 12 carries a large number of tools. The beam 300 includes a beam frame 310, a beam house 320 that couples the beam frame 310 (and thus the beam 300) to the frame 12 of the agricultural plough 10, at least one plough body, illustrated as multiple plough bodies 330, carried by the beam frame 310, and at least one blade, illustrated as multiple blades 340, associated with the plough bodies 330. The beam house 320 couples the beam frame 310 to the frame 12 of the agricultural plough 10, which may be coupled to the tractor 7, so the plough bodies 330 and blade(s) 340 of coupled to the beam frame 310 are carried by the frame 12 of the agricultural plough 10. The plough bodies 330 may be, for example, formed as scoops or shovels that will turn over soil as the beam 300 is carried by the tractor 7. Many different shapes of plough bodies are known and the plough bodies 330 may be provided with any suitable shape according to the present disclosure. The depth adjustment mechanism 20 coupled to the frame 12 may be adjusted in order to adjust the vertical height of the beam frame 310 relative to the ground to adjust a furrow depth of a furrow that is created in soil by the plough bodies 330, as will be described further herein. As used herein, the term "depth" is with respect to the beam frame 310 towards the ground to correspond to a depth at which plough bodies 330 will penetrate into the soil, *e.g.,* a greater depth will correspond to a greater distance from the beam frame 310 towards the ground and a deeper penetration into soil whereas a smaller depth will correspond to a smaller distance from the beam frame 310 towards the ground and a shallower penetration into soil.

One or more blades 340 may be associated with one or more of the plough bodies 330 and are carried by the beam frame 310. In some embodiments, each blade 340 is associated with a respective plough body 330 so the blades 340 are each carried adjacent to a respective plough body 330. The blade(s) 340 may be carried in front of the one or more plough bodies 330. In some embodiments, the blade(s) 340 is coupled directly to the beam frame 310 or, alternatively, may be coupled to a different element carried by the beam frame 310, such as a plough body 330 and/or a skimmer 350. The blade(s) 340 may, for example, be mounted to a skimmer bracket 351 that is coupled to one of the skimmers 350, but it should be appreciated that the blade(s) 340 does not need to be coupled to a skimmer 350. The blade(s) 340 includes an edge 341 that may be sharpened, the significance of which will be appreciated from the further description herein. The blade(s) 340 may, for example, be flat to reduce friction while traveling through soil and ensure a clean cut. The blade(s) 340 may comprise a material that is amenable to sharpening, including but not limited to metals such as stainless steel. In some embodiments, the blade(s) 340 may also be coated with a high hardness material, such as tungsten carbide, to further toughen the blade(s) 340 and increase the lifespan of the blade(s) 340.

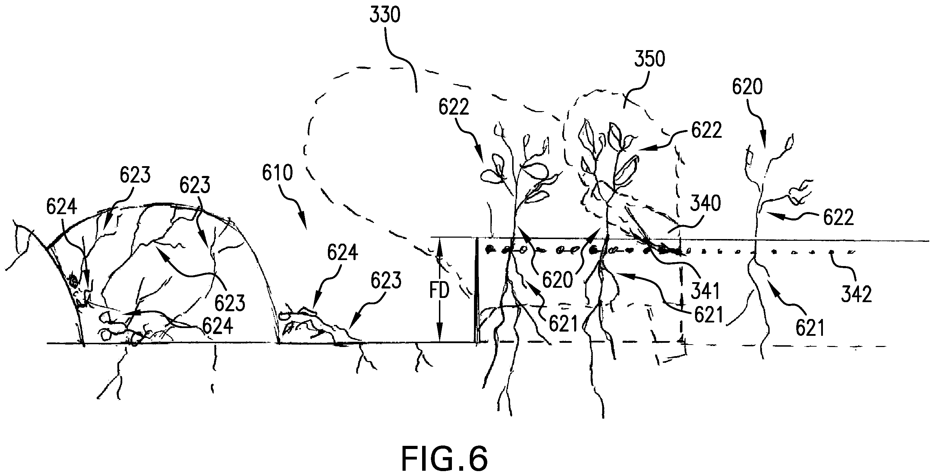

Referring specifically to FIG. 6, it is illustrated how the beam 300 provided according to the present disclosure can be used to reduce the number of weeds in a field. While only one plough body 330 and blade 340 are illustrated in FIG. 6, it should be appreciated that the other plough bodies 330 and blades 340 of the beam 300 may operate in a similar manner. As illustrated, the plough body 330 is carried so it creates a furrow 610 in the soil that has a furrow depth FD, which can be controlled by the depth adjustment mechanism. As the plough body 330 creates the furrow 610, the plough body 330 also turns over soil. As the beam 300 is carried through the field so the plough body 330 creates the furrow 610, plants 620 in the soil may be dug up and turned over with the soil into the furrow 610.

As is known, the plants 620 generally include a root 621 and a photosynthetic region 622. The root 621 is anchored in the soil to support the plant and absorb water and nutrients from the soil to support growth of the plant 620. It should be appreciated that while the term "root" is used herein, the term "root" may also refer to the root system of the plant 620, which may include many branches of roots that penetrate deep into the soil. The photosynthetic region 622, on the other hand, generally grows out of the soil in order to capture sunlight and utilize the sunlight to produce chemical energy for the plant in the form of sugar from carbon dioxide and water, with oxygen also being produced as a byproduct. The process of the plant utilizing sunlight to produce sugar and oxygen from carbon dioxide and water is known as photosynthesis. In many plant species, the photosynthetic region 622 is in the leaves of the plant 622 and may also be known as the "green region" of the plant 620 due to the presence of chlorophyll, which is a green pigment involved in the photosynthesis process and gives many plant leaves their green color. As is known, the root 621 may be able to grow without the photosynthetic region 622 initially but upon reaching a certain size may depend on the energy produced by photosynthesis in the photosynthetic region 622 to grow further. As can be seen in FIG. 6, the root 621 may penetrate quite deeply into the soil, even below the deepest part of the furrow 610, so some of the root 621 remains in the soil undisturbed under the furrow 610 even after the furrow 610 is created.

The blade 340 is carried by the beam frame 310 at a blade depth, in front of the plough body 330 or otherwise, such that the blade 340 separates the photosynthetic region 622 of the plant 620 from the root 621 of the plant 620 before or as the plough body 330 creates the furrow 610. In this respect, the blade 340 is configured to separate a photosynthetic region 622 of a plant 620 from a root 621 of the plant 620 before or as the plough body 330 creates the furrow 610. The blade depth is represented in FIG. 6 by a blade cutting line 342, which represents the depth in the soil that the blade 340 cuts in order to separate the photosynthetic region 622 from the root 621. By separating the photosynthetic region 622 of the plant 620 from the root 621 of the plant 620 with the blade 340, the root 621 no longer receives produced sugar (chemical energy) from the photosynthetic region 622 and the photosynthetic region 622 is no longer supported and able to grow. As can be seen in FIG. 6, separated roots 623 and separated photosynthetic regions 624 may be turned over into the furrow 610 and then buried to prevent the previously growing plant, which may be a weed, from growing in the field. Further, even though the portion of the root 621 that has penetrated the soil below the furrow 610 may remain anchored, the remaining anchored portion is relatively far below the ground and has a reduced, if not eliminated, capacity to regrow into a plant that will compete with adjacently growing crops. Therefore, the blade 340 provided according to the present disclosure is able to sever the root 621 and the photosynthetic region 622 of plants 620 as the beam 300 is pulled through a field in order to reduce the ability of the plants, which may be weeds, to regrow after ploughing.

The blade 340 may be carried at an orientation so the edge 341 of the blade 340 extends across an entirety of a width of a furrow created by the plough body 330, allowing the blade 340 to cut plants across the entire width of the created furrow. In some embodiments, the blade 340 is even shaped and carried in a manner so the edge 341 extends across a width that is greater than the width of the created furrow so the blade 340 can cut plants that may not be buried in the created furrow. If the blade 340 is directly coupled to the beam frame 310, the blade 340 may be coupled to the beam frame 310 by a blade bracket or similar mounting structure.

As previously described, the beam 300 may include one or more skimmers 350, as is known. Each skimmer 350 may be associated with a respective one of the plough bodies 330 and carried by the beam frame 310 in front of the respective plough body 330. As is known, the skimmers 350 may be configured to cut the soil to a skimmer depth that is less than the furrow depth FD, as illustrated in FIG. 6. As also illustrated in FIG. 6, the blade depth 342 may be greater than the skimmer depth so the blade 340 cuts below the skimmer(s) 350. In some embodiments, the skimmer 350 is coupled to the beam frame 310 by a rail 352, with the skimmer 350 being adjustably coupled to the rail 352 such that the skimmer depth is adjustable. The skimmer 350 may, for example, have a rail bracket 353 that is coupled to one of a plurality of rail openings 354 of the rail 352 by a fastener 355, with the rail opening 354 to which the rail bracket 353 is coupled controlling the skimmer depth. If the blade 340 is coupled to the skimmer 350, adjustment of the skimmer depth using the rail 352 can also easily adjust the blade depth 342 of the blade 340, especially with respect to the associated plough body 330.

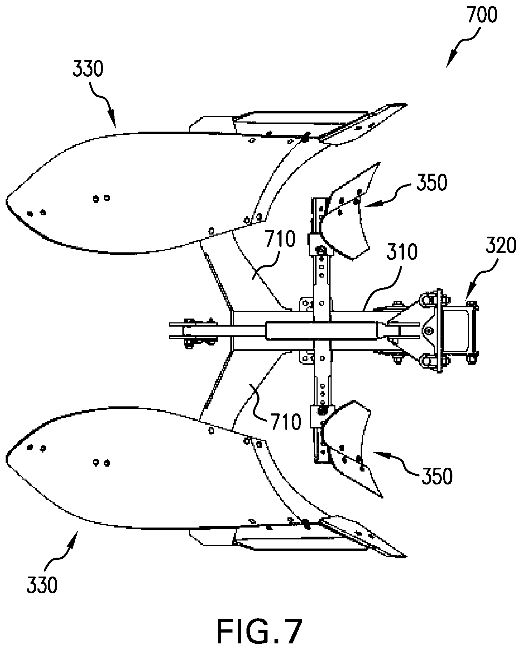

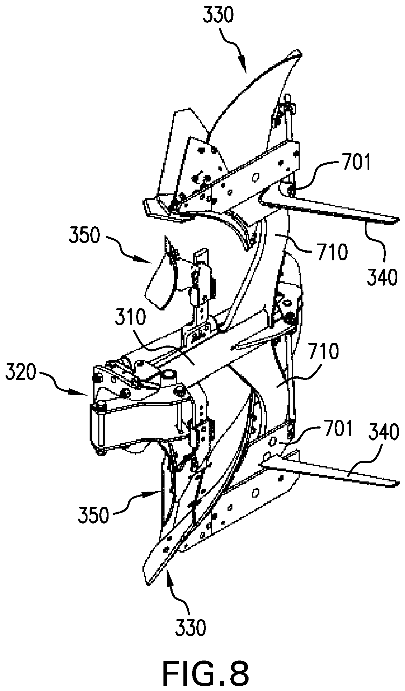

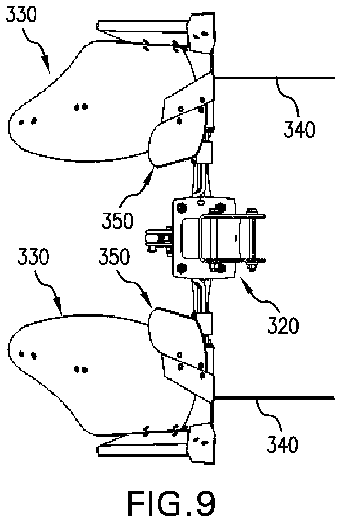

Referring now to FIGS. 7-9, another exemplary embodiment of a beam 700 provided according to the present disclosure is illustrated that can be coupled to the frame 12 of the agricultural plough 10. The beam 700 is similar to the beam 300 of FIGS. 3-6, with similar elements being numbered similarly. Further, while only one beam 700 is illustrated in FIGS. 7-9, it should be appreciated that multiple beams 700 can be coupled to the frame 12 of the agricultural plough 10. However, unlike the beam 300, which has blades 340 that are mounted adjacent to their respectively associated plough bodies 330 to cut plants 620 adjacent to the plough body 330 creating the furrow 610 in which the cut plants 620 will be buried, the beam 700 of FIGS. 7-9 has blades 340 that are disposed behind a plough body 330 so the blades 340 cut plants 620 that will be buried in a furrow created by an associated plough body 330 that is behind the plough body 330 adjacent to the blade 340. In other words, the blades 340 of the beam 700 cut plants well in front of the associated subsequent plough body 330 creating its respective furrow in which the cut plants will be buried rather than cutting plants at nearly the same time as the adjacent plough body 330 creating the furrow in which the cut plants will be buried. In this respect, the blades 340 of the beam 700 may not overlap with the scooping section of the adjacent plough body 330, as is the case with the beam 300, but rather overlap with the scooping section of the subsequent plough body 330. As illustrated, the blades 340 of the beam 700 may also couple to a bracket 701 that is coupled to a secondary beam 710 to which the adjacent plough body 330 is coupled. In some embodiments, the bracket 701 also couples the plough body 330 to the secondary beam 710, so no additional bracket is needed to mount the blade 340. By placing the blade 340 in this fashion so the blade 340 cuts plants for subsequent plough bodies 330, rather than adjacent plough bodies, the blade 340 may have reduced disturbance of soil flow across the plough bodies 330 and also have reduced residue flow between the plough bodies 330. In other respects, the beam 700 of FIGS. 7-9 may be similar to the previously described beam 300.

From the foregoing, it should also be appreciated that the present disclosure provides a method of ploughing a field 1 with the previously described agricultural plough system including an agricultural vehicle, such as a tractor 7, carrying an agricultural plough 10. The method includes carrying the agricultural plough 10 across the field 1 with the agricultural vehicle 7 so the at least one blade 340 severs a photosynthetic region 622 of a plant 620 from a root 621 of the plant 620 prior to the separated photosynthetic region 624 and root 623 being buried in soil as the at least one plough body 330 creates a furrow 610. The separated photosynthetic region 624 and the root 623 may, for example, be turned over by the plough body 330 with soil into the furrow 610. In some embodiments, the separated photosynthetic region 624 and root 623 may also be moved by a skimmer 350 before being buried in soil.

From the foregoing, it should be appreciated that the agricultural plough 10 provided according to the present disclosure with one or more blades 340 can sever plant roots 621 and photosynthetic regions 622 to reduce the chance that the plant 620, such as a weed, will regrow after ploughing. The blade(s) 340 can be placed in a variety of locations to cut the plants. Further, the blade(s) 340 can be easily retrofit to existing agricultural ploughs in order to reduce the number of weeds in a field. Therefore, the agricultural plough 10 provided according to the present disclosure represent a convenient and easy way to reduce the number of weeds in a field during ploughing.

These and other advantages of the present invention will be apparent to those skilled in the art from the foregoing specification. Accordingly, it is to be recognized by those skilled in the art that changes or modifications may be made to the above-described embodiments without departing from the broad inventive concepts of the invention. It is to be understood that this invention is not limited to the particular embodiments described herein, but is intended to include all changes and modifications that are within the scope and spirit of the invention.

## Claims

1. An agricultural plough (10), comprising:
a frame (12);
a mount (14) coupled to the frame (12) and configured to couple the frame (12) to an agricultural vehicle (7);
at least one beam (300, 700) carried by the frame (12) and comprising a beam frame (310) that carries at least one plough body (330); and
a depth adjustment mechanism (20) coupled to the frame (12) and configured to adjust a furrow depth (FD) of a furrow (610) created in soil by the at least one plough body (330);
**characterized by:**
at least one blade (340) associated with the at least one plough body (330) and carried by the beam frame (310) at a blade depth (342) such that the at least one blade (340) is configured to separate a photosynthetic region (622) of a plant (620) from a root (621) of the plant (620) before or as the at least one plough body (330) creates the furrow (610).

2. The agricultural plough (10) of claim 1, further comprising at least one skimmer (350) associated with the at least one plough body (330) and carried by the beam frame (310) in front of the at least one plough body (330), the at least one skimmer (350) being configured to cut soil to a skimmer depth that is less than the furrow depth (FD).

3. The agricultural plough (10) of claim 2, wherein the at least one blade (340) is coupled to the at least one skimmer (350).

4. The agricultural plough (10) of claim 3, wherein the blade depth (342) is greater than the skimmer depth.

5. The agricultural plough (10) of any one of claims 2 to 4, wherein the at least one skimmer (350) is coupled to the beam frame (310) by a rail (352), the at least one skimmer (350) being adjustably coupled to the rail (352) such that the skimmer depth is adjustable.

6. The agricultural plough (10) of any one of claims 2 to 5, wherein the at least one blade (340) is mounted to a skimmer bracket (351) coupled to the at least one skimmer (350).

7. The agricultural plough (10) of any one of the preceding claims, wherein the at least one beam (300, 700) comprises a plurality of beams (300, 700) coupled to the frame (12), the at least one plough body (330) comprises a plurality of plough bodies (330), and the at least one blade (340) comprises a plurality of blades (340), each of the blades (340) being associated with a respective one of the plough bodies (330).

8. The agricultural plough (10) of any one of the preceding claims, wherein the at least one blade (340) is flat.

9. The agricultural plough (10) of any one of the preceding claims, wherein the at least one blade (340) is carried in front of the at least one plough body (330).

10. An agricultural plough system comprising an agricultural vehicle (7) carrying the agricultural plough (10) of any one of the preceding claims.

11. The agricultural plough system of claim 10, wherein the agricultural plough (10) comprises a plurality of plough bodies (330) each configured to create a respective furrow (610) while being carried by the agricultural vehicle (7), each of the furrows (610) extending in parallel relative to the other furrows (610).

12. The agricultural plough system of claim 10 or 11, wherein the agricultural plough (10) is carried at an angle relative to a travel axis (8) of the agricultural vehicle (7).

13. A method of ploughing a field (1) with the agricultural plough system of any one of claims 10 to 12, the method comprising carrying the agricultural plough (10) across the field (1) with the agricultural vehicle (7) so the at least one blade (340) severs a photosynthetic region (622) of a plant (620) from a root (621) of the plant (620) prior to the separated photosynthetic region (624) and root (623) being buried in soil as the at least one plough body (330) creates the furrow (610).

14. The method of claim 13, further comprising burying the separated root (623) and photosynthetic region (624) in soil with the at least one plough body (330).
